# EUROPEAN PATENT SPECIFICATION

(11) **EP 3 854 131 B1**
(45) Date of publication and mention of the grant of the patent: **08.01.2025**
(21) Application number: 19862616.0
(22) Date of filing: 16.09.2019
(51) Int. Cl.: H04W 24/10, H04W 36/00, H04L 5/00

(54) **TECHNIQUES IN MEASUREMENT GAP CONFIGURATIONS WITH BANDWIDTH PART IN MEASUREMENTS OF MULTIPLE SYNCHRONIZATION SIGNALS**
VERFAHREN BEI MESSSPALTKONFIGURATIONEN MIT BANDBREITENTEIL BEI MESSUNGEN MEHRERER SYNCHRONISATIONSSIGNALE
TECHNIQUES DANS DES CONFIGURATIONS D'INTERVALLE DE MESURE AVEC PARTIE DE BANDE PASSANTE DANS DES MESURES DE MULTIPLES SIGNAUX DE SYNCHRONISATION

(30) Priority: 17.09.2018 US 201862732428 P
(43) Date of publication of application: 28.07.2021
(73) Proprietor: INTEL Corporation, Santa Clara, CA 95054 (US)
(72) Inventor: YIU, Candy, Portland, OR 97201 (US); CUI, Jie, Santa Clara, CA 95054 (US); TANG, Yang, San Jose, CA 95120 (US)
(74) Representative: Goddar, Heinz J.
(86) International application number: PCT/US2019/051364
(87) International publication number: WO 2020/060950

(56) References cited:
- INTEL CORPORATION: "Overall impact in RAN2 for BWP", vol. RAN WG2, no. Prague, Czech Republic; 20171009 - 20171013, 8 October 2017 (2017-10-08), XP051342628, Retrieved from the Internet <URL:http://www.3gpp.org/ftp/Meetings_3GPP_SYNC/RAN2/Docs/> [retrieved on 20171008]
- MEDIATEK INC: "RRM Measurement Considering Bandwidth Part Operation", vol. RAN WG2, no. Prague, Czech; 20171009 - 20171013, 8 October 2017 (2017-10-08), XP051342898, Retrieved from the Internet <URL:http://www.3gpp.org/ftp/Meetings_3GPP_SYNC/RAN2/Docs/> [retrieved on 20171008]
- "3rd Generation Partnership Project; Technical Specification Group Radio Access Network; NR; Radio Resource Control (RRC) protocol specification (Release 15)", 21 June 2018 (2018-06-21), XP051519424, Retrieved from the Internet <URL:http://www.3gpp.org/ftp/tsg%5Fran/WG2%5FRL2/Specifications/201806%5Ffinal%5Fspecs%5Fafter%5FRAN%5F80/38331%2Df21%2Ezip> [retrieved on 20180621]
- HUAWEI ET AL.: "Discussion on LS on gap-assisted serving cell measurement", R4-1810699, 3GPP TSG RAN WG4 #88, 10 August 2018 (2018-08-10), Gothenburg, Sweden, XP051579628
- ERICSSON: "Introduction of SA", R2-1813492, 3GPP TSG RAN WG2 #103, 5 September 2018 (2018-09-05), Gothenburg, Sweden, XP051477129
- SPREADTRUM COMMUNICATIONS: "Remaining issues on bandwidth parts and carrier aggregation", R1-1808805, 3GPP TSG RAN WG1 #94, 10 August 2018 (2018-08-10), Gothenburg, Sweden, XP051516178
- HUAWEI ET AL.: "RRC triggered BWP activation and initial BWP configuration", R2-1807461, 3GPP TSG RAN WG2 #102, 11 May 2018 (2018-05-11), Busan, Korea, XP051464684
- ERICSSON: "Remaining issues for BWP operation", R1-1807263, 3GPP TSG RAN WG1 #93, 12 May 2018 (2018-05-12), Busan, Korea, XP051462996

## Description

### Field

Embodiments of the present invention relate generally to the technical field of wireless communications.

### Background

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure. Unless otherwise indicated herein, the approaches described in this section are not prior art to the claims in the present disclosure and are not admitted to be prior art by inclusion in this section.

Fifth Generation (5G) New Radio (NR) involved communications and/or networks have been developed various techniques based on bandwidth part (BWP) and BWP switching. Existing intra-frequency measurement may always be configured with a measurement gap (MG) due to relatively faster BWP switching than MG reconfiguration, when an active BWP is switched to interrupt the intra-frequency measurement in a radio resource management (RRM). When more than one synchronization signal (SS) associated with the same cell have been transmitted to a user equipment (UE), the UE may be required to measure all of the SSs even they are associated with the same cell. The UE may not be able to identify that those SSs are associated with the same cell until detecting and measuring them. This may affect radio resource management (RRM) efficiency with respect to either the UE or the network. New solutions are needed in this regard.

Tdoc. R2-1710882, "RRM Measurement Considering Bandwidth Part Operation", 3GPP TSG-RAN WG2 #99-bis, October 2017, identifies and discusses issues related to RRM measurement that need to be addressed by RAN2 because of the new aspects introduced by BWP operation. This document notes that RRM measurement on the single SSB is considered as the baseline for inter-cell mobility and further notes that if multiple SSBs are transmitted in frequency domain in the serving cell of the UE, the UE should be indicated with one specific SSB in the UE's serving cell which is used for measurement for mobility to make the UE measurement behavior clear. One straightway is that only one SSB configuration is included in the MO configuration, which is considered as the specific SSB for inter-cell mobility.

Tdoc. R2-1710592, "Overall impact in RAN2 for BWP", 3GPP TSG-RAN WG2 #99-bis, October 2017, also studies the RAN2 impact on RAN1 BWP agreements in related to configuration, activation/ deactivation and RRM aspects. Also this document notes that the UE should be indicated with one specific SSB in the UE's serving cell which is used for measurement for mobility and confirms that that multiple SS block may be transmitted in different BWP but the network will only configure one SS block for RRM purpose.

### Summary

The invention is defined by the subject matter of the independent claims. Advantageous embodiments are subject to the dependent claims.

### Brief Description of the Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
Figure 1 schematically illustrates an example of a network comprising a user equipment (UE) and an access node (AN) in a wireless network, in accordance with various embodiments.
Figure 2 illustrates example components of a device in accordance with various embodiments.
Figure 3A illustrates an example radio frequency front end (RFFE) incorporating a millimeter Wave (mmWave) RFFE and one or more sub-millimeter wave radio frequency integrated circuits (RFICs) in accordance with some embodiments. Figure 3B illustrates an alternative RFFE in accordance with various embodiments.
Figure 4 illustrates an example of switching BWPs during an intra-frequency measurement that is illustrated in both time domain and frequency domain.
Figure 5 illustrates an example SSB-based intra-frequency measurement in a channel with multiple BWPs, in accordance with various embodiments.
Figure 6A illustrates an operation flow/algorithmic structure to facilitate a process of configuring SSB measurements associated with one serving cell in intra-frequency measurements from a UE perspective, in accordance with various embodiments. Figure 6B illustrates an operation flow/algorithmic structure to facilitate the process of configuring SSB measurements associated with one serving cell in intra-frequency measurements from an AN perspective, in accordance with various embodiments.
Figure 7 illustrates example interfaces of baseband circuitry in accordance with some embodiments.
Figure 8 illustrates hardware resources in accordance with some embodiments.

### Detailed Description

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrases "A or B" and "A and/or B" mean (A), (B), or (A and B). For the purposes of the present disclosure, the phrases "A, B, or C" and "A, B, and/or C" mean (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include any combination of integrated circuits (for example, a field-programmable gate array (FPGA), an application specific integrated circuit (ASIC), etc.), discrete circuits, combinational logic circuits, system on a chip (SOC), system in a package (SiP), that provides the described functionality. In some embodiments, the circuitry may execute one or more software or firmware modules to provide the described functions. In some embodiments, circuitry may include logic, at least partially operable in hardware.

A measurement gap configuration configures a gap period repeatedly in time so that a UE may use the configured period to conduct a non-data duty, for example, cell measurements. The term "measurement" herein refers to one or more measurements involving non-data duty between the UE and network. The measurement may be performed with respect to one or more synchronization signals (SSs) that include one or more SS blocks (SSBs). A UE may use an MG to identify and measure intra-frequency cells, intra-frequency cells, and/or inter-RAT E-UTRAN cells. During a configured MG period, the UE may not be expected to transmit or receive data with serving cell, or like activities.

An MG configuration may correspond to one or more MG patterns on which the UE's operations may be based. The operations may include identifying and measuring cells in the network, and other non-data operations. A UE may be configured with an MG while operating at any frequency in either FR1 or FR2. Such a measurement gap configuration may be referred to as a UE gap or a per UE gap.

Note that terms "measurement gap (MG)" and "gap" are used interchangeably throughout this disclosure, and terms "UE gap," "per-UE gap," "UE MG," "per-UE MG" are used interchangeably throughout this disclosure.

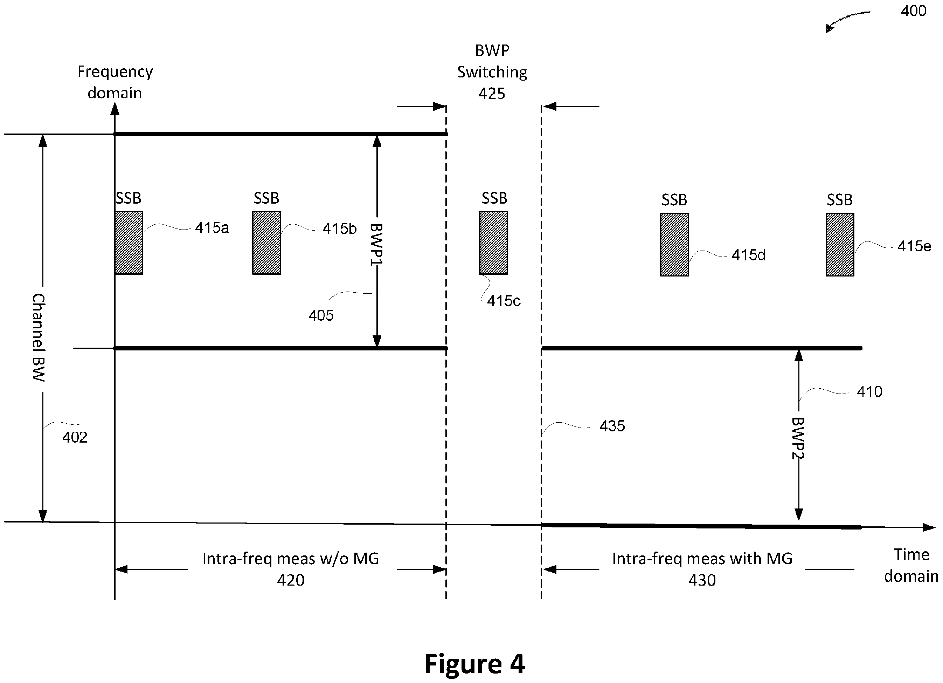

In some situations, a UE may be configured with more than one measurement gap according to different frequencies at which the UE may operate. For example, a UE may comply with respective measurement gaps while operating at FR1 and FR2 to accommodate different operations at different frequency ranges. However, the UE may activate or use one MG and/or MG pattern at any given time. This may affect UE and/or network data processing efficiency. A detailed example is to be illustrated with respect to Figure 4. Thus, it may improve UE and/or network efficiency if the UE can indicate its capability of supporting multiple MGs and the network can configure one or more MGs accordingly.

Note that terms "FR1 gap," "per-FR1 gap," "FR1 MG," "per-FR1 MG" are used interchangeably throughout this disclosure, and terms "FR2 gap," "per-FR2 gap," "FR2 MG," "per-FR2 MG" are used interchangeably throughout this disclosure. FR1 gap and FR2 gap may be collectively referred to as FR gap.

In an intra-frequency measurement under existing NR RRM, An MG may be configured to a UE regardless that the SSB is in an active BWP or a non-active BWP. This may negatively affect data throughput performance for the UE and network. Further, when a plurality of SSBs of different BWPs are transmitted to the UE, the UE may have to measure all of the SSBs with one or more MGs. Conventionally, the UE and network may have to use the configured MG(s) once they are configured, which means, for example, data activities may halt to yield to the SSB measurements. In addition, to measure multiple SSBs from the same cell may cause additional throughput degradation but gain little value, if the multiple SSBs carry the same or substantially similar information with respect to the purposes of an SSB measurement.

Embodiments described herein may include, for example, apparatuses, methods, and storage media for configuration and determination of SSB measurements regarding multiple SSBs from a single cell in an intra-frequency measurement. The implementation may improve UE and/or network efficiency and allow the UE to perform only one or not all SSB measurements with respect to the cell to reduce or avoid unnecessary throughput degradation.

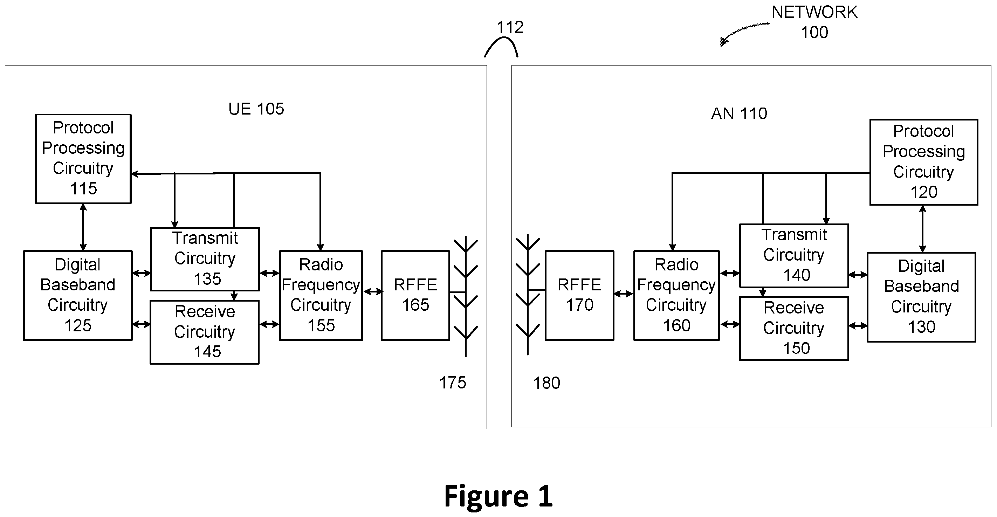

Figure 1 schematically illustrates an example wireless network 100 (hereinafter "network 100") in accordance with various embodiments herein. The network 100 may include a UE 105 in wireless communication with an AN 110. In some embodiments, the network 100 may be a NR SA network. The UE 105 may be configured to connect, for example, to be communicatively coupled, with the AN 110. In this example, the connection 112 is illustrated as an air interface to enable communicative coupling, and can be consistent with cellular communications protocols such as a 5G NR protocol operating at mmWave and sub-6GHz, a Global System for Mobile Communications (GSM) protocol, a code-division multiple access (CDMA) network protocol, a Push-to-Talk (PTT) protocol, and the like.

The UE 105 is illustrated as a smartphone (for example, a handheld touchscreen mobile computing device connectable to one or more cellular networks), but may also comprise any mobile or non-mobile computing devices, such as a Personal Data Assistant (PDA), pager, laptop computer, desktop computer, wireless handset, customer premises equipment (CPE), fixed wireless access (FWA) device, vehicle mounted UE or any computing device including a wireless communications interface. In some embodiments, the UE 105 can comprise an Internet of Things (IoT) UE, which can comprise a network access layer designed for low-power IoT applications utilizing short-lived UE connections. An IoT UE can utilize technologies such as narrowband IoT (NB-IoT), machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An NB-IoT/MTC network describes interconnecting NB-IoT/MTC UEs, which may include uniquely identifiable embedded computing devices (within the Internet infrastructure), with short-lived connections. The NB-IoT/MTC UEs may execute background applications (for example, keep-alive message, status updates, location related services, etc.).

The AN 110 can enable or terminate the connection 112. The AN 110 can be referred to as a base station (BS), NodeB, evolved-NodeB (eNB), Next-Generation NodeB (gNB or ng-gNB), NG-RAN node, cell, serving cell, neighbor cell, and so forth, and can comprise ground stations (for example, terrestrial access points) or satellite stations providing coverage within a geographic area.

The AN 110 can be the first point of contact for the UE 105. In some embodiments, the AN 110 can fulfill various logical functions including, but not limited to, radio network controller (RNC) functions such as radio bearer management, uplink and downlink dynamic radio resource management and data packet scheduling, and mobility management.

In some embodiments, a downlink resource grid can be used for downlink transmissions from the AN 110 to the UE 105, while uplink transmissions can utilize similar techniques. The grid can be a time-frequency grid, called a resource grid or time-frequency resource grid, which is the physical resource in the downlink in each slot. Such a time-frequency plane representation is a common practice for orthogonal frequency division multiplexing (OFDM) systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UE 105. The physical downlink control channel (PDCCH) may carry information about the transport format and resource allocations related to the PDSCH channel, among other things. It may also inform the UE 105 about the transport format, resource allocation, and hybrid automatic repeat request (HARQ) information related to the uplink shared channel. Typically, downlink scheduling (assigning control and shared channel resource blocks to the UE 105 within a cell) may be performed at the AN 110 based on channel quality information fed back from any of the UE 105. The downlink resource assignment information may be sent on the PDCCH used for (for example, assigned to) the UE 105.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition.

Some embodiments may use concepts for resource allocation for control channel information that are an extension of the above-described concepts. For example, some embodiments may utilize an enhanced physical downlink control channel (ePDCCH) that uses PDSCH resources for control information transmission. The ePDCCH may be transmitted using one or more enhanced control channel elements (ECCEs). Similar to the above, each ECCE may correspond to nine sets of four physical resource elements known as enhanced resource element groups (EREGs). An ECCE may have other numbers of EREGs in some situations.

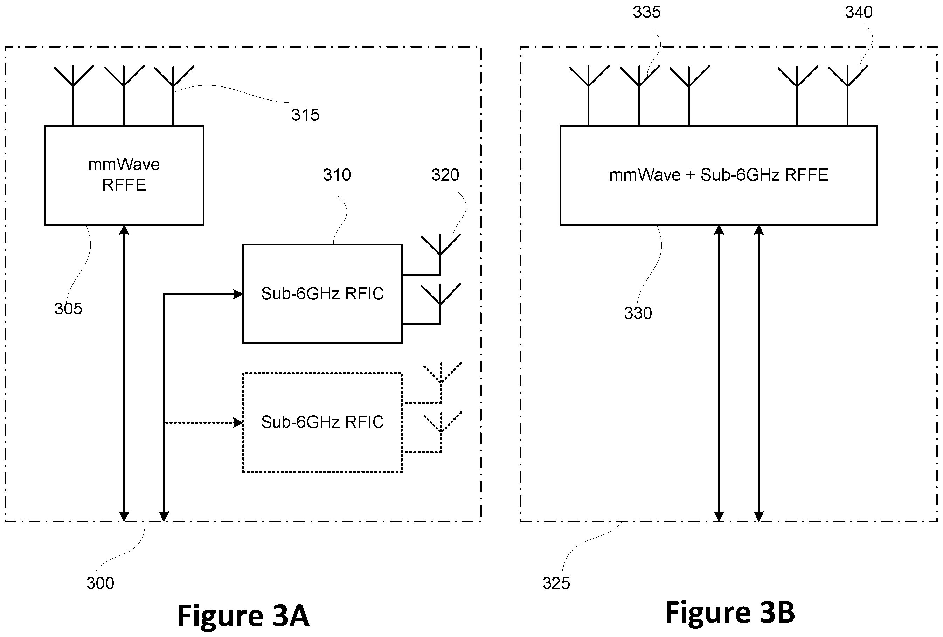

As shown in Figure 1, the UE 105 may include millimeter wave communication circuitry grouped according to functions. The circuitry shown here is for illustrative purposes and the UE 105 may include other circuitry shown in Figure 3. The UE 105 may include protocol processing circuitry 115, which may implement one or more of layer operations related to medium access control (MAC), radio link control (RLC), packet data convergence protocol (PDCP), radio resource control (RRC) and non-access stratum (NAS). The protocol processing circuitry 115 may include one or more processing cores (not shown) to execute instructions and one or more memory structures (not shown) to store program and data information.

The UE 105 may further include digital baseband circuitry 125, which may implement physical layer (PHY) functions including one or more of HARQ functions, scrambling and/or descrambling, coding and/or decoding, layer mapping and/or de-mapping, modulation symbol mapping, received symbol and/or bit metric determination, multi-antenna port pre-coding and/or decoding, which may include one or more of space-time, space-frequency or spatial coding, reference signal generation and/or detection, preamble sequence generation and/or decoding, synchronization sequence generation and/or detection, control channel signal blind decoding, and other related functions.

The UE 105 may further include transmit circuitry 135, receive circuitry 145, radio frequency (RF) circuitry 155, and RF front end (RFFE) 165, which may include or connect to one or more antenna panels 175.

In some embodiments, RF circuitry 155 may include multiple parallel RF chains or branches for one or more of transmit or receive functions; each chain or branch may be coupled with one antenna panel 175.

In some embodiments, the protocol processing circuitry 115 may include one or more instances of control circuitry (not shown) to provide control functions for the digital baseband circuitry 125 (or simply, "baseband circuitry 125"), transmit circuitry 135, receive circuitry 145, radio frequency circuitry 155, RFFE 165, and one or more antenna panels 175.

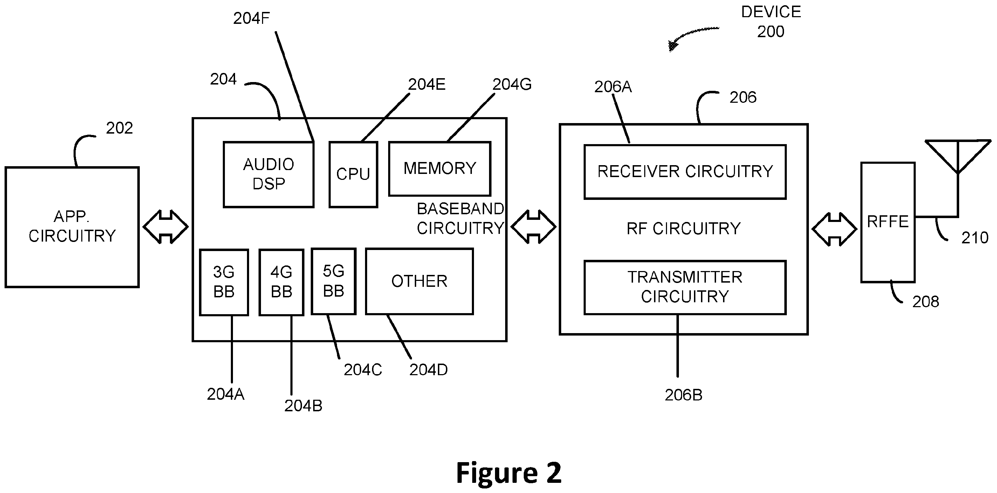

A UE reception may be established by and via the one or more antenna panels 175, RFFE 165, RF circuitry 155, receive circuitry 145, digital baseband circuitry 125, and protocol processing circuitry 115. The one or more antenna panels 175 may receive a transmission from the AN 110 by receive-beamforming signals received by a plurality of antennas/antenna elements of the one or more antenna panels 175. Further details regarding the UE 105 architecture are illustrated in Figures 2, 3, and 6. The transmission from the AN 110 may be transmit-beamformed by antennas of the AN 110. In some embodiments, the baseband circuitry 125 may contain both the transmit circuitry 135 and the receive circuitry 145. In other embodiments, the baseband circuitry 125 may be implemented in separate chips or modules, for example, one chip including the transmit circuitry 135 and another chip including the receive circuitry 145.

Similar to the UE 105, the AN 110 may include mmWave/sub-mmWave communication circuitry grouped according to functions. The AN 110 may include protocol processing circuitry 120, digital baseband circuitry 130 (or simply, "baseband circuitry 130"), transmit circuitry 140, receive circuitry 150, RF circuitry 160, RFFE 170, and one or more antenna panels 180.

A cell transmission may be established by and via the protocol processing circuitry 120, digital baseband circuitry 130, transmit circuitry 140, RF circuitry 160, RFFE 170, and one or more antenna panels 180. The one or more antenna panels 180 may transmit a signal by forming a transmit beam. Figure 3 further illustrates details regarding the RFFE 170 and antenna panel 180.

Figure 2 illustrates example components of a device 200 in accordance with some embodiments. In contrast to Figure 1, Figure 2 illustrates example components of the UE 105 or the AN 110 from a receiving and/or transmitting function point of view, and it may not include all of the components described in Figure 1. In some embodiments, the device 200 may include application circuitry 202, baseband circuitry 204, RF circuitry 206, RFFE circuitry 208, and a plurality of antennas 210 together at least as shown. The baseband circuitry 204 may be similar to and substantially interchangeable with the baseband circuitry 125 in some embodiments. The plurality of antennas 210 may constitute one or more antenna panels for beamforming. The components of the illustrated device 200 may be included in a UE or an AN. In some embodiments, the device 200 may include fewer elements (for example, a cell may not utilize the application circuitry 202, and instead include a processor/controller to process IP data received from an EPC). In some embodiments, the device 200 may include additional elements such as, for example, a memory/storage, display, camera, sensor, or input/output (I/O) interface. In other embodiments, the components described below may be included in more than one device (for example, said circuitry may be separately included in more than one device for Cloud-RAN (C-RAN) implementations).

The application circuitry 202 may include one or more application processors. For example, the application circuitry 202 may include circuitry such as, but not limited to, one or more single-core or multi-core processors. The processor(s) may include any combination of general-purpose processors and dedicated processors (for example, graphics processors, application processors, etc.). The processors may be coupled with or may include memory/storage and may be configured to execute instructions stored in the memory/storage to enable various applications or operating systems to run on the device 200. In some embodiments, processors of application circuitry 202 may process IP data packets received from an EPC.

The baseband circuitry 204 may include circuitry such as, but not limited to, one or more single-core or multi-core processors. The baseband circuitry 204 may be similar to and substantially interchangeable with the baseband circuitry 125 and the baseband circuitry 130 in some embodiments. The baseband circuitry 204 may include one or more baseband processors or control logic to process baseband signals received from a receive signal path of the RF circuitry 206 and to generate baseband signals for a transmit signal path of the RF circuitry 206. Baseband circuitry 204 may interface with the application circuitry 202 for generation and processing of the baseband signals and for controlling operations of the RF circuitry 206. For example, in some embodiments, the baseband circuitry 204 may include a third generation (3G) baseband processor 204A, a fourth generation (4G) baseband processor 204B, a fifth generation (5G) baseband processor 204C, or other baseband processor(s) 204D for other existing generations, generations in development or to be developed in the future (for example, second generation (2G), sixth generation (6G), etc.). The baseband circuitry 204 (for example, one or more of baseband processors 204A-D) may handle various radio control functions that enable communication with one or more radio networks via the RF circuitry 206. In other embodiments, some or all of the functionality of baseband processors 204A-D may be included in modules stored in the memory 204G and executed via a central processing unit (CPU) 204E. The radio control functions may include, but are not limited to, signal modulation/demodulation, encoding/decoding, radio frequency shifting, etc. In some embodiments, modulation/demodulation circuitry of the baseband circuitry 204 may include Fast-Fourier Transform (FFT), precoding, or constellation mapping/demapping functionality. In some embodiments, encoding/decoding circuitry of the baseband circuitry 204 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 204 may include one or more audio digital signal processor(s) (DSP) 204F. The audio DSP(s) 204F may include elements for compression/decompression and echo cancellation and may include other suitable processing elements in other embodiments. Components of the baseband circuitry may be suitably combined in a single chip, in a single chipset, or disposed on a same circuit board in some embodiments. In some embodiments, some or all of the constituent components of the baseband circuitry 204 and the application circuitry 202 may be implemented together such as, for example, on a SOC.

In some embodiments, the baseband circuitry 204 may provide for communication compatible with one or more radio technologies. For example, in some embodiments, the baseband circuitry 204 may support communication with an evolved universal terrestrial radio access network (E-UTRAN) or other wireless metropolitan area networks (WMAN), a wireless local area network (WLAN), a wireless personal area network (WPAN). Embodiments in which the baseband circuitry 204 is configured to support radio communications of more than one wireless protocol may be referred to as multi-mode baseband circuitry.

RF circuitry 206 may enable communication with wireless networks using modulated electromagnetic radiation through a non-solid medium. In various embodiments, the RF circuitry 206 may include one or more switches, filters, amplifiers, etc. to facilitate the communication with the wireless network. RF circuitry 206 may include receiver circuitry 206A, which may include circuitry to down-convert RF signals received from the RFFE circuitry 208 and provide baseband signals to the baseband circuitry 204. RF circuitry 206 may also include transmitter circuitry 206B, which may include circuitry to up-convert baseband signals provided by the baseband circuitry 204 and provide RF output signals to the RFFE circuitry 208 for transmission.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) and digital-to-analog converter (DAC) circuitry and the baseband circuitry 204 may include a digital baseband interface to communicate with the RF circuitry 206.

In some dual-mode embodiments, a separate radio integrated circuit (IC) circuitry may be provided for processing signals for each spectrum, although the scope of the embodiments is not limited in this respect.

RFFE circuitry 208 may include a receive signal path, which may include circuitry configured to operate on RF beams received from one or more antennas 210. The RF beams may be transmit beams formed and transmitted by the AN 110 while operating in mmWave or sub-mmWave frequency rang. The RFFE circuitry 208 coupled with the one or more antennas 210 may receive the transmit beams and proceed them to the RF circuitry 206 for further processing. RFFE circuitry 208 may also include a transmit signal path, which may include circuitry configured to amplify signals for transmission provided by the RF circuitry 206 for transmission by one or more of the antennas 210, with or without beamforming. In various embodiments, the amplification through transmit or receive signal paths may be done solely in the RF circuitry 206, solely in the RFFE circuitry 208, or in both the RF circuitry 206 and the RFFE circuitry 208.

In some embodiments, the RFFE circuitry 208 may include a TX/RX switch to switch between transmit mode and receive mode operation. The RFFE circuitry 208 may include a receive signal path and a transmit signal path. The receive signal path of the RFFE circuitry 208 may include a low noise amplifier (LNA) to amplify received RF beams and provide the amplified received RF signals as an output (for example, to the RF circuitry 206). The transmit signal path of the RFFE circuitry 208 may include a power amplifier (PA) to amplify input RF signals (for example, provided by RF circuitry 206), and one or more filters to generate RF signals for beamforming and subsequent transmission (for example, by one or more of the one or more antennas 210).

Processors of the application circuitry 202 and processors of the baseband circuitry 204 may be used to execute elements of one or more instances of a protocol stack. For example, processors of the baseband circuitry 204, alone or in combination, may be used to execute Layer 3, Layer 2, or Layer 1 functionality, while processors of the application circuitry 202 may utilize data (for example, packet data) received from these layers and further execute Layer 4 functionality (for example, transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/AN, described in further detail below.

Figure 3A illustrates an embodiment of a radio frequency front end 300 incorporating an mmWave RFFE 305 and one or more sub-6GHz radio frequency integrated circuits (RFICs) 310. The mmWave RFFE 305 may be similar to and substantially interchangeable with the RFFE 165, RFFE 170, and/or the RFFE circuitry 208 in some embodiments. The mmWave RFFE 305 may be used for the UE 105 while operating in FR2 or mmWave; the RFICs 310 may be used for the UE 105 while operating in FR1, sub-6GHz, or LTE bands. In this embodiment, the one or more RFICs 310 may be physically separated from the mmWave RFFE 305. RFICs 310 may include connection to one or more antennas 320. The RFFE 305 may be coupled with multiple antennas 315, which may constitute one or more antenna panels.

Figure 3B illustrates an alternate embodiment of an RFFE 325. In this aspect both millimeter wave and sub-6GHz radio functions may be implemented in the same physical RFFE 330. The RFFE 330 may incorporate both millimeter wave antennas 335 and sub-6GHz antennas 340. The RFFE 330 may be similar to and substantially interchangeable with the RFFE 165, RFFE 170, and/or the RFFE circuitry 208 in some embodiments.

Figures 3A and 3B illustrate embodiments of various RFFE architectures for either the UE 105 or the AN 110.

In a cellular network, it may be desirable to measure cell quality, such as reference signal received power (RSRP), reference signal received quality (RSRQ), signal to noise and interference ratio (SINR), and/or other like quality measurements, for handover to a neighbor cell and/or adding a new carrier component (CC) in a carrier aggregation (CA). With LTE, a cell-specific reference signal (CRS) may be transmitted continuously so that the UE may measure the cell quality of a neighbor cell. By contrast, NR does not have reference signal CRS, which may reduce resource overhead and interference to other cells. With NR, synchronization signal/physical broadcast channel (PBCH) blocks (SSBs) may be used for cell quality measurements. The SSBs may have a longer transmission periodicity than CRS. The SSB periodicity may be configured for 5, 10, 20, 40, 80, 160 milliseconds (ms), and etc. However, the UE may or may not measure cell quality with the same periodicity for multiple SSBs. Note that an SSB may refer to a set of SSBs transmitted repeatedly with a particular carrier frequency, periodicity, and SCS. An appropriate periodicity may be configured based on various channel conditions and network conditions, which may reduce unnecessary measurements and/or reduce power consumption of the UE. As such, SSB-based RRM measurement timing configuration (SMTC) window may be used to configure the UE with the periodicity and timing of the SSBs with which the UE may use for measurements. For example, the SMTC window configuration may support the periodicities of 5, 10, 20, 40, 80, and 160 ms and durations of 1, 2, 3, 4, and 5 ms. The SMTC window may also be set with an offset if the SSBs shift. Thus, to measure an SSB or a set of SSBs, an SMTC window may be configured to the UE with SMTC periodicity, SMTC offset, SMTC duration.

In embodiments, if the UE needs to measure SSBs, a measurement map (MG) may be configured to the UE so that the UE may not transmit or receive data, or perform some other operations while measuring the SSBs. In NR, an MG length (MGL) may be configured with several different values rather than one fixed length for LTE. Thus, a more adequate MGL can be configured for a particular measurement object (MO) to reduce unnecessary degradation of throughput. For example, the MGL for NR may be configurable to 5.5 ms, 4 ms, 3.5 ms, 3 ms, or 1,ms in additional to the original 6 ms. Note that MO refers to an object on which the UE may perform measurements. In intra-frequency and inter-frequency measurements, an MO may indicate a frequency/time location and subcarrier spacing (SCS) of a target reference signal to be measured.

In recent NR RRM and other events, BWP has been used to distinguish and/or configure certain frequency range and SCS so that the UE and its serving cell may use it for communications between them. With bandwidth adaptation (BA), the receive and transmit bandwidth of the UE need not be as large as the bandwidth (BW) of the cell and can be adjusted. A subset of the total cell bandwidth of a cell is referred to as a Bandwidth Part (BWP) and BA is achieved by configuring the UE with one or more BWP(s) and indicating which of the configured BWPs is currently an active BWP. A BWP may be characterized with a BW and an SCS with which a UE and network establish and perform communications.

When the UE is configured for operation in BWPs of a serving cell, the UE may be configured by higher layers for the serving cell with a set of BWPs for receptions by the UE (DL BWP set) in a DL bandwidth by the parameter *BWP-Downlink* and a set of BWPs for transmissions by the UE (UL BWP set) in an UL bandwidth by the parameter *BWP-Uplink* for the serving cell. In some embodiments, the number of BWPs in one set may be configured and/or limited.

An initial active DL BWP may be defined by a location and number of contiguous PRBs, a subcarrier spacing, and a cyclic prefix, for the control resource set for Type0-PDCCH common search space.

Figure 4 illustrates an example of switching BWPs during an intra-frequency measurement 400 that is illustrated in both time domain and frequency domain, in accordance with various embodiments. The UE operates within a channel BW 402 in this example, and there are two BWPs shown as BWP1 405 and BWP2 410 in the channel BW 402.While the UE 105 operates in BWP1 405 as its active BWP with its serving cell in the network, the UE 105 may need to perform an intra-frequency measurement of one or more SSBs 415a/b/c/d/e based on a request from the AN 110. The SSBs 415 may be from the serving cell or a target cell, or a combination thereof, in the network.

In a conventional intra-frequency measurement, the UE 105 may operate at a carrier frequency and SCS in a channel BW with respect to the serving cell and one or more SSBs, which are transmitted by the same serving cell or a target cell, may be transmitted at the same carrier frequency and SCS. Thus, the UE 105 may not need an MG to perform the measurement of the one or more SSBs, since the UE may operate at the same carrier frequency and SCS to process data while performing the SSB measurement. However, with the introduction of BWP, the UE may operate in a BWP, which is referred to as an active BWP, while is requested to measure SSBs in another BWP in the same channel BW. For the example descriptions herein, the SSBs may be located in one BWP, which is referred to as an initial BWP. Thus, an MG may be needed in an intra-frequency measurement.

Figure 4 illustrates an intra-frequency measurement of SSBs 415a and 415b without an MG because the UE 105 can perform both the measurement and data processing that includes data transmission, reception, etc., during an intra-frequency measurement without MG 420. In this case, the BWP1 405 is an active and initial BWP. Then, if a BWP switching 425 occurs during the intra-frequency measurement, the active BWP may be switched from BWP1 405 to BWP2 410. Once the UE 105 does not have BWP1 as the active BWP while the SSBs 415c/d/e are still in the BWP1 405, the UE 105 may need an MG to measure SSBs 415c/d/e, because the UE 105 may not be able to operate in BWP1 and BWP2 simultaneously. Accordingly, an MG may be configured and used by the UE for an intra-frequency measurement with MG 430. However, to configure an MG may require relatively longer time than BWP switching, since the MG may be configured via RRC signaling while the BWP switching may be configured via downlink channel indication (DCI) signaling. Thus, the MG may not be configured and in use until a time point 435. This may cause interrupted intra-frequency measurement and one or more SSBs may not be measured, e.g., SSB 415c as illustrated in Figure 4. Meanwhile, configuring, reconfiguring, or de-configuring MG by the AN 110 to the UE 105 may also cause performance degradation and throughput loss between the UE 105 and the network. One existing approach is to configure the UE 105 with an MG in all intra-frequency measurements regardless active BWP or BWP switching. This approach may not miss SSBs to measure or cause MG rescheduling overhead. However, the UE 105 may not process data during the configured MG in use, even when the UE 105 may not need one, which may cause more inefficiency in throughput performance.

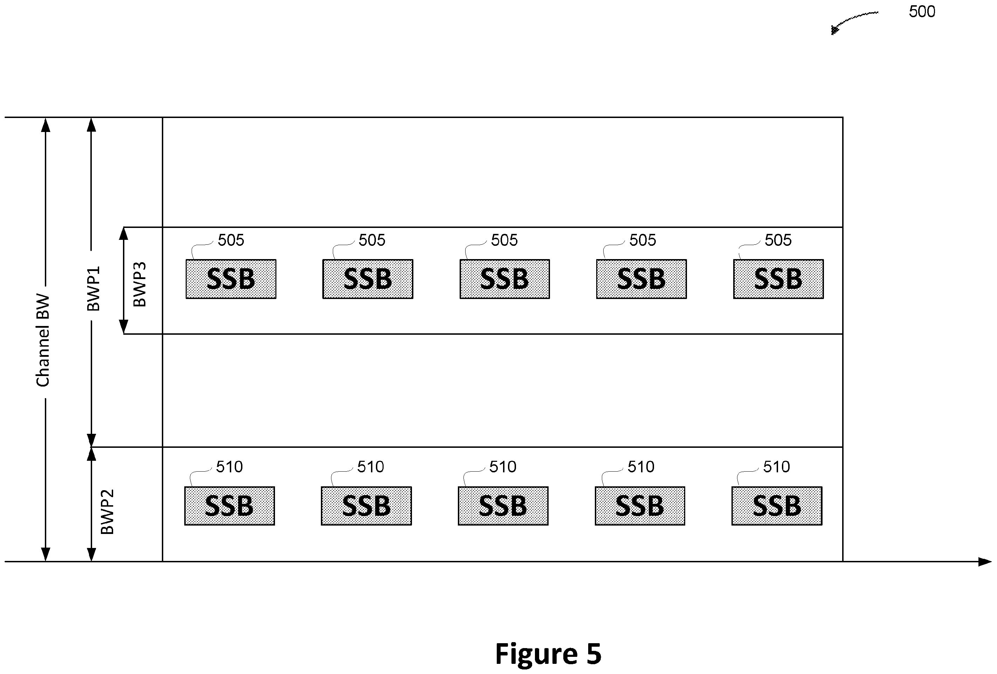

In addition, when more than one SSB in different BWPs are transmitted to the UE 105 (not shown in Figure 4), the UE 105 may have to measure all of the SSBs plainly. However, if two of the SSBs are from the same cell, it may not be necessary to measure both of them to for cell quality estimation or determination. For example, if the two SSBs contain the same transmitting parameters, it may not gain extra information by measuring the SSBs of the same parameters from the same cell in different BWPs. Further details are described with respect to Figure 5.

Figure 5 illustrates an example SSB-based intra-frequency measurement 500 in a channel BW with multiple BWPs, in accordance with various embodiments. In embodiments, the UE 105 may be configured with a number of BWPs. For example, the UE may be configured with BWP1, 2, and 3. The configuration of one or more BWPs may be configured during a BWP configuration described earlier. In this example, BWP3 is overlapped by the BWP1 and BWP1 has a broader BW. BWP1 and BWP3 may or may not have the same SCS. Meanwhile, BWP2 occupies a different frequency range and it may have the same or a different SCS from the BWP1 or BWP3. Figure 5 illustrates the AN 110 may transmit a first series of SSBs 505 associated with a serving cell in BWP1. BWP1 may be an initial BWP of the UE 105. The AN 110 may transmit a second series of SSBs 510 associated with the serving cell in BWP2. A series of SSBs refers to one or more SSBs characterized in the same BWP with the same frequency and SCS from the same cell, and may be referred to as an SSB for the purposes in this disclosure. The terms "series of SSBs " and "SSB" are used interchangeably in this disclosure, unless otherwise indicated. Note that in Figure 5, both SSB 505 and SSB 510 are associated with the same serving cell. However, various embodiments herein may apply to a scenario that the SSB 505 and SSB 510 are associated with a neighbor cell or a target cell, as long as BWPs are to be defined and used. Also note that Figure 5 illustrates an example with two SSBs and three BWPs, but more SSBs and/or BWPs may be the scenario and various embodiments herein applies.

In embodiments, both the SSB 505 and SSB 510 are from the same serving cell. It may be beneficial for the UE 105 to only measure one of the SSBs to minimize the throughput degradation due to the SSB measurement, especially when an MG is activated for the corresponding SSB measurement. Thus, the AN may configure an authorization to the UE 105 so that the UE 105 is authorized or allowed to measure only one SSB if more than one SSB associated with the same cell are transmitted in different BWPs. Or with this authorization, the UE 105 may be allowed to measure one or more SSBs associated with the same cell but not all of them. Various embodiments herein describe how to signal or configure a UE with such an authorization and how UE use it. This authorization may be referred as a capability as well, and the UE 105 need to be able to determine, among all SSBs, of which are from the same cell. However, a UE 105 may not automatically know that which SSBs are from the same serving cell or the same cell until it detects certain cell identification (ID) information from corresponding SSBs. Various embodiments herein describe how the UE 105 may be able to determine two or more SSBs are associated with the same cell and measure which one or ones of them.

In the embodiments of the invention, a linkage between each SSB and its cell may be developed so that the UE 105 is able to determine two or more SSBs are associated with the same cell. There are multiple approaches to realize this. Below shows some examples how the UE 105 may determine linkage between SSBs and cells, or how to determine whether an SSB is associated with a particular cell or serving cell. In embodiments herein, only linkages between SSBs and a serving cell is described, as it is assumed that BWP configuration is only applied to serving cells but not neighbor cells. However, some or all of the embodiments herein may also apply to neighbor cells if BWP is configured to those cells. When a BWP is configured to the UE 105 for downlink communications between the UE and the serving cell, a *BWP-Downlink* information element (IE) is configured to the UE 105 to indicate information regarding the BWP and other downlink information. If an SSB is to be transmitted in this BWP, a measurement object (MO) ID (*MeasObjectId*) is added to the *BWP-Downlink* IE to indicate the SSB of this BWP needs to be measured. Conventionally, the MO ID may be configured to the UE in some other configuration IEs. But by including this MO ID in the *BWP-Downlink* IE, the UE 105 can acknowledge that the SSB associated with the MO ID is from the serving cell, since the *BWP-Downlink* IE may correspond to the serving cell and/or carry cell information itself. Thus, the UE 105 may be able to determine that the SSB in this *BWP-Downlink* IE is associated with the serving cell.

An example *BWP-Downlink* IE description is illustrated below, according to 3GPP technical specification (TS) 38.331 v15.2.1 (June 21, 2018). The capability is indicated in "MeasObjectId" in the IE, as shown in bold:

### - BWP-Downlink

The IE *BWP-Downlink* is used to configure an additional downlink bandwidth part (not for the initial BWP). The field *bwp-Id* in this IE does not take the value 0 since that is reserved for the initial BWP.

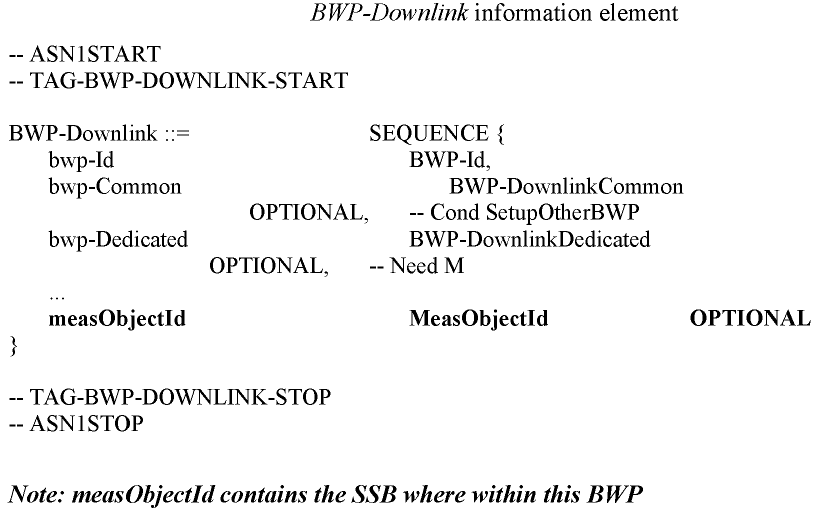

In embodiments, the AN 110 may configure an authorization or a capability to the UE 105 to allow the UE 105 only measure one SSB associated with the same serving cell when more than one SSB are to be transmitted to the UE. Or the UE 105 may be allowed not to measure all of the SSBs that are associated with the same serving cell. Such an authorization may be configured to the UE 104 via an existing IE or a new IE. In other embodiments, this authentication may be indicated implicitly. In a non-claimed example, if the AN 110 has a configuration that maps a list of MO to corresponding BWPs, the UE 105 may consider that configuration as an indication for granting the authentication to the UE 105 under certain conditions.

The AN 110 may configure one or more BWPs that are eligible for such an operation of measuring less-than-all SSBs or only one SSB. The eligible BWPs may be indicated by a list of MOs, if the MOs are associated with BWPs that may be only configurable for the serving cell. An non-limiting examples is illustrated below, according to TS 38.331. A list of eligible BWPs may be indicated in the IE via indications of MOs, as shown in bold:

### MeasConfig

The IE *MeasConfig* specifies measurements to be performed by the UE, and covers intra-frequency, inter-frequency and inter-RAT mobility as well as configuration of measurement gaps.

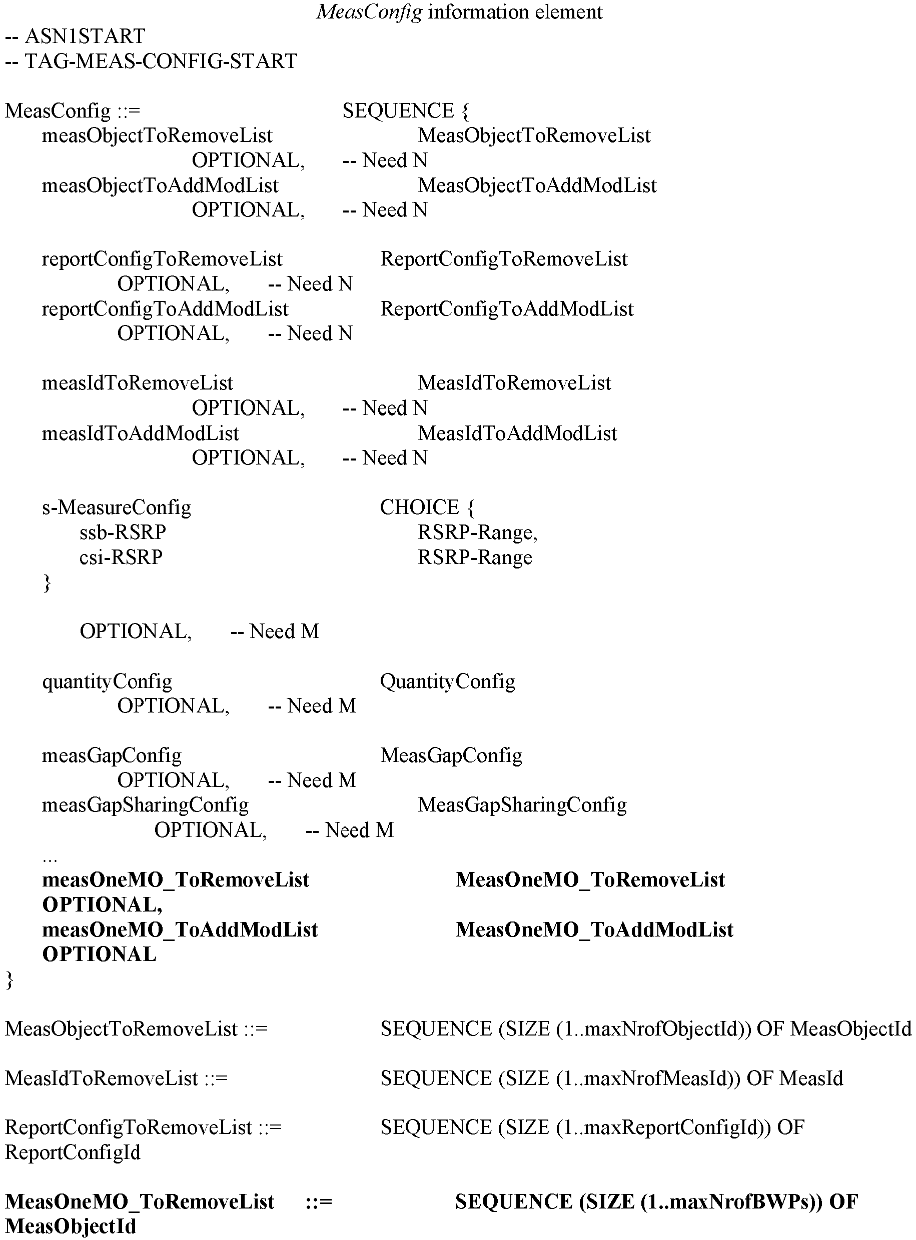

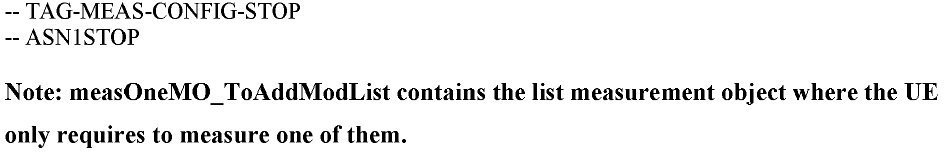

In embodiments, once the UE 105 determines a group of SSBs are associated with the same serving cell, the UE may determine which one or ones of the group of SSBs to measure. There may be many ways to determine based on various considerations or priorities for the UE 105 and/or the cell/network. For example, the UE 105 may measure the SSB in the active BWP so that an MG may not be needed for this measurement. Such an indication of measuring the SSB of the active BWP may be configured by the AN 110 in one of the above illustrated IEs or in a different IE. Alternatively, the AN 110 may pre-configure this indication to the UE 105, or the UE may have a build-in priority for SSB measurements without network configurations. An indication may be configured to the UE 105 as to measure one or more SSBs as long as no MG is activated. Other algorithm may be implemented for the UE 105 to determined which one or one of SSBs to measure.

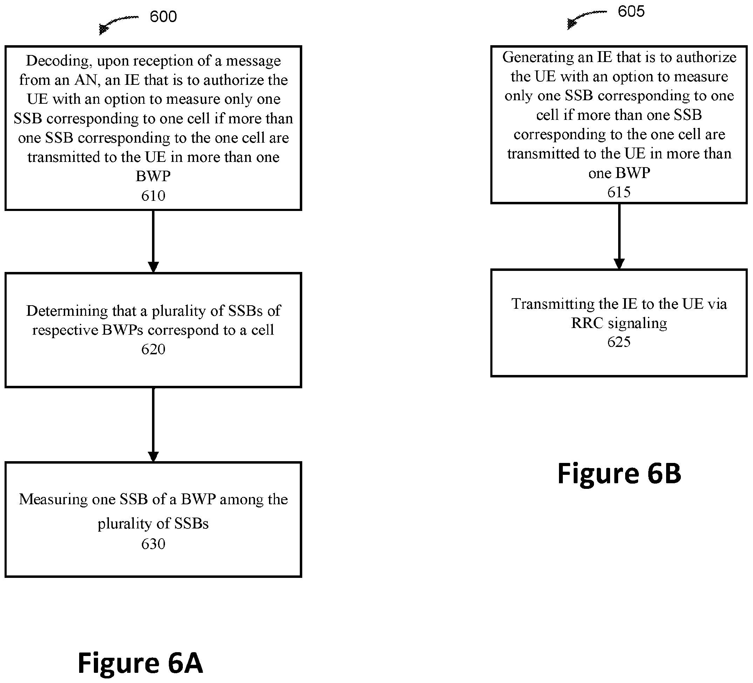

Figure 6A illustrates an operation flow/algorithmic structure 600 to facilitate a process of configuring SSB measurements associated with one serving cell in intra-frequency measurements from a UE perspective, in accordance with various embodiments. The operation flow/algorithmic structure 600 may be performed by the UE 105 or circuitry thereof.

The operation flow/algorithmic structure 600 includes, at 610, decoding, upon reception of a message from an AN, an IE that is to authorize the UE with an option to measure only one SSB corresponding to one cell if more than one SSB corresponding to the one cell are transmitted to the UE in more than one BWP. Additionally, the IE may authorize the UE 105 with an option to not measure all of the SSBs corresponding to the one cell. The cell may be a serving cell of the UE 105. The IE may use one bit to indicate whether such an option or capability is authorized or not. This IE may be an MG configuration (*MeasGapConfig*) IE, which is the same as or substantially similar to the *MeasGapConfig* IE, or a BWP downlink IE (*BWP-Downlink*) that are defined in TS 38.331. The message may further indicate one or more BWPs that are eligible for this option. Such an indication may be explicit and/or implicit.

The operation flow/algorithmic structure 600 may further include, at 620, determining that a plurality of SSBs of respective BWPs correspond to a cell. In the embodiments of the invention, the UE 105 determines the plurality of SSBs are associated with the same cell based on respective MO information according to one or more corresponding *BWP-Downlink* IEs. The IE may be transmitted via broadcasting, such as SIB or PBCH, or via dedicated signaling, such as RRC or DCI signaling.

The operation flow/algorithmic structure 600 further includes, at 630, measuring one SSB of a BWP among the plurality of SSBs. Such an SSB measurement may perform with an MG or without. For example, if the SSB to be measured is in the active BWP, an MG may not be needed even if one MG already configured for such a measurement. This is because the UE 105 may be able to measure the SSB and process data in the same active BWP. The UE 105 may determine which one SSB to measure among the plurality of SSBs that are associated with the same cell. There may be various ways in making such a determination. For example, the UE 105 may determine to measure the SSB in an active BWP if there is one SSB in the active BWP, so that a corresponding MG may be deactivated even if configured for this measurement. If no SSBs are transmitted in any active BWPs, the UE may select the SSB based on other priorities or approaches.

Figure 6B illustrates an operation flow/algorithmic structure 605 to facilitate the process of configuring SSB measurements associated with one serving cell in intra-frequency measurements from an AN perspective, in accordance with various embodiments. The operation flow/algorithmic structure 605 may be performed by the AN 110 or circuitry thereof.

The operation flow/algorithmic structure 605 may include, at 615, generating an IE that is to authorize the UE with an option to measure only one SSB corresponding to one cell if more than one SSB corresponding to the one cell are transmitted to the UE in more than one BWP. The IE may be a measurement configuration (*MeasConfig*) IE and the IE includes a bit information to indicate the option.

The operation flow/algorithmic structure 605 may further include, at 625, transmitting the IE to the UE via RRC signaling. The AN may transmit the IE or a message that includes the IE to the UE. In addition, The AN may generate the message that include the IE for transmission.

The AN may generate a configuration message that configures a BWP switch to the UE during the intra-frequency measurement. The configuration message may include the *BWP-Downlink* IE or a different IE. In embodiments of the invention, the AN generates more than one *BWP-Downlink* IE. The *BWP-Downlink* IEs include MO information, based on which the UE may determine whether a particular SSB is associated with the serving cell or not. The configuration message may be transmitted to the UE via DCI.

In some embodiments, the AN may generate and transmit one or more SSBs in respective BWPs for SSB measurements. The AN may further generate and transmit respective IEs to indicate MOs with respect to those SSBs.

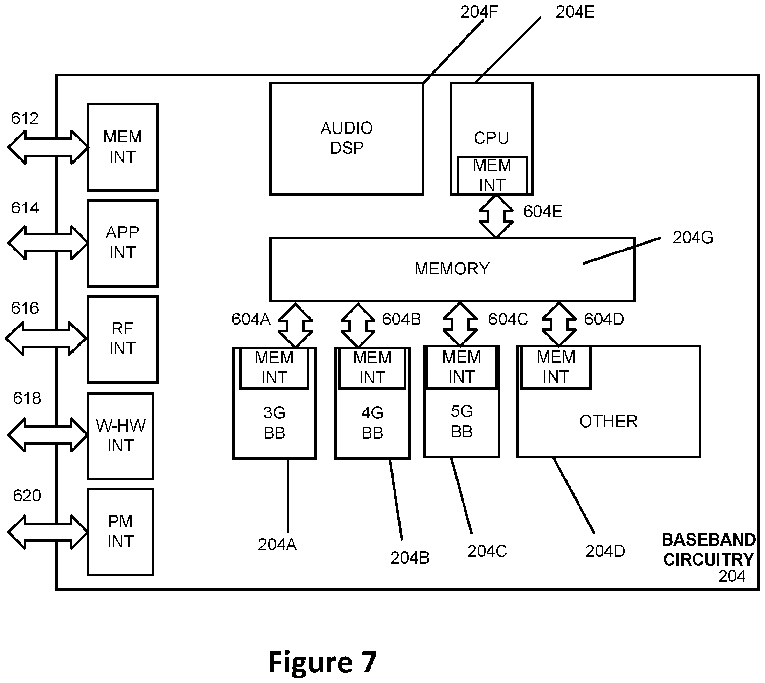

Figure 7 illustrates example interfaces of baseband circuitry in accordance with some embodiments. As discussed above, the baseband circuitry 204 of Figure 2 may comprise processors 204A-204E and a memory 204G utilized by said processors. The processors 204A-204E of the UE 105 may perform some or all of the operation flow/algorithmic structure 600, in accordance with various embodiments with respect to Figures 5A and 5B. The processors 204A-204E of the AN 110 may perform some or all of the operation flow/algorithmic structure 605, in accordance with various embodiments with respect to Figures 5A and 5B. Each of the processors 204A-204E may include a memory interface, 704A-704E, respectively, to send/receive data to/from the memory 204G. The processors 204A-204E of the UE 105 may be used to process the SFTD measurement; the processors 204A-204E of the AN 110 may be used to generate the SFTD measurement configuration.

The baseband circuitry 204 may further include one or more interfaces to communicatively couple to other circuitries/devices, such as a memory interface 712 (e.g., an interface to send/receive data to/from memory external to the baseband circuitry 204), an application circuitry interface 714 (for example, an interface to send/receive data to/from the application circuitry 202 of Figure 2), an RF circuitry interface 716 (for example, an interface to send/receive data to/from RF circuitry 206 of Figure 2), a wireless hardware connectivity interface 718 (for example, an interface to send/receive data to/from Near Field Communication (NFC) components, Bluetooth^{®} components (for example, Bluetooth^{®} Low Energy), Wi-Fi^{®} components, and other communication components), and a power management interface 720 (for example, an interface to send/receive power or control signals).

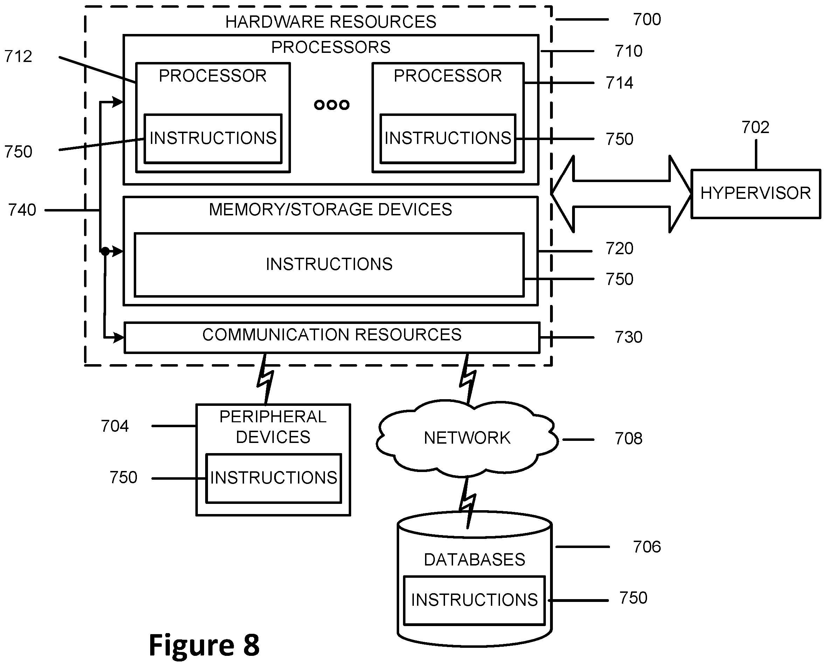

Figure 8 is a block diagram illustrating components, according to some example embodiments, able to read instructions from a machine-readable or computer-readable medium (for example, a non-transitory machine-readable storage medium) and perform any one or more of the methodologies discussed herein. Specifically, Figure 8 shows a diagrammatic representation of hardware resources 800 including one or more processors (or processor cores) 810, one or more memory/storage devices 820, and one or more communication resources 830, each of which may be communicatively coupled via a bus 840. For embodiments where node virtualization (for example, network function virtualization (NFV)) is utilized, a hypervisor 802 may be executed to provide an execution environment for one or more network slices/sub-slices to utilize the hardware resources 800.

The processors 810 (for example, a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 812 and a processor 814.

The memory/storage devices 820 may include main memory, disk storage, or any suitable combination thereof. The memory/storage devices 820 may include, but are not limited to, any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 830 may include interconnection or network interface components or other suitable devices to communicate with one or more peripheral devices 804 or one or more databases 806 via a network 808. For example, the communication resources 830 may include wired communication components (for example, for coupling via a Universal Serial Bus (USB)), cellular communication components, NFC components, Bluetooth components (for example, Bluetooth Low Energy), Wi-Fi components, and other communication components.

Instructions 850 may comprise software, a program, an application, an applet, an app, or other executable code for causing at least any of the processors 810 to perform any one or more of the methodologies discussed herein, e.g., the operation flows 600 and 605. For example, in an embodiment in which the hardware resources 800 are implemented into the UE 105, the instructions 850 may cause the UE to perform some or all of the operation flow/algorithmic structure 600. In other embodiments, the hardware resources 800 may be implemented into the AN 110. The instructions 850 may cause the AN 110 to perform some or all of the operation flow/algorithmic structure 605. The instructions 850 may reside, completely or partially, within at least one of the processors 810 (for example, within the processor's cache memory), the memory/storage devices 820, or any suitable combination thereof. Furthermore, any portion of the instructions 850 may be transferred to the hardware resources 800 from any combination of the peripheral devices 804 or the databases 806. Accordingly, the memory of processors 810, the memory/storage devices 820, the peripheral devices 804, and the databases 806 are examples of computer-readable and machine-readable media.

The present disclosure is described with reference to flowchart illustrations or block diagrams of methods, apparatuses (systems) and computer program products according to embodiments of the disclosure. It will be understood that each block of the flowchart illustrations or block diagrams, and combinations of blocks in the flowchart illustrations or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means that implement the function/act specified in the flowchart or block diagram block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide processes for implementing the functions/acts specified in the flowchart or block diagram block or blocks.

## Claims

1. One or more computer-readable media comprising instructions to, upon execution of the instructions by one or more processors of a user equipment, UE, cause the UE to:
decode, upon reception of a message from an access node, AN, an information element, IE, that authorizes the UE (104, 105) with an option to measure only one synchronization signal block, SSB, corresponding to one cell, if a plurality of SSBs (505) corresponding to the one cell are transmitted to the UE (104, 105) in a plurality of bandwidth parts, BWPs;
decode, upon reception, a plurality of BWP-downlink IEs that configure the respective BWPs, wherein the BWP-downlink IEs of those BWPs on which the plurality of SSBs (505) are transmitted include a measurement object, MO, identifications, IDs; and
determine that the plurality of SSBs (505) transmitted to the UE (104, 105) in the respective BWPs correspond to the one cell based on the MO IDs included in the plurality of BWP-downlink IEs;
measure one SSB of a BWP among the plurality of SSBs (505) of respective BWPs for which the BWP-downlink IE includes a MO ID.

2. The one or more computer-readable media of claim 1, wherein each of the plurality of SSBs (505) includes a set of repeated SSBs (505).

3. The one or more computer-readable media of claim 1 or 2, wherein the cell is a serving cell of the UE (104, 105) or a neighboring cell.

4. One or more computer-readable media, computer-readable media, comprising instructions to, upon execution of the instructions by one or more processors of an access node, AN, cause the AN to:
generate an information element, IE, that is to authorize the UE (104, 105) with an option to measure only one synchronization signal block, SSB, corresponding to one cell of the AN (110), if a plurality of SSBs (505) corresponding to the one cell of the AN (110) are transmitted to the UE (104, 105) in a plurality of bandwidth parts, BWPs; and
transmit the IE to the UE (104, 105) via radio resource control, RRC, signaling,
generate a plurality of synchronization signal blocks, SSBs (505), associated with the plurality of BWPs of the cell of the AN (110); and
transmit the plurality of SSBs (505) to the UE (104, 105) in more than one of the plurality of BWPs of the cell of the AN (110),
generate a plurality of BWP-downlink IEs that configure the respective BWPs of the cell of the AN (110), wherein the BWP-downlink IEs of those BWPs on which the plurality of SSBs (505) are transmitted include a measurement object, MO, identifications, IDs; and
transmit the one or more BWP-downlink IEs to the UE (104, 105).

5. An apparatus of a user equipment, UE, configured to:
decode, upon reception of a message from an access node (110), AN (110), an information element, IE, that authorizes the UE (104, 105) with an option to measure only one synchronization signal block, SSB, corresponding to one cell, if a plurality of SSBs (505) corresponding to the one cell are transmitted to the UE (104, 105) in a plurality of bandwidth parts, BWPs;
decode, upon reception, a plurality of BWP-downlink IEs that configure the respective BWPs and respectively, wherein the BWP-downlink IEs of those BWPs on which the plurality of SSBs (505) are transmitted include a measurement object, MO, identifications, IDs; and
determine that the plurality of SSBs (505) transmitted to the UE (104, 105) in the respective BWPs correspond to the one cell based on the MO IDs included in the plurality of BWP-downlink IEs ;
measure one SSB of a BWP among the plurality of SSBs (505) of respective BWPs for which the BWP-downlink IE includes a MO ID.

6. An apparatus of an access node, AN, configured to:
generate an information element, IE, that is to authorize the UE (104, 105) with an option to measure only one synchronization signal block, SSB, corresponding to one cell of the AN (110), if a plurality of SSBs (505) corresponding to the one cell of the AN (110) are transmitted to the UE (104, 105) in a plurality of bandwidth parts, BWPs; and
transmit the IE to the UE (104, 105) via radio resource control, RRC, signaling,
generate a plurality of synchronization signal blocks, SSBs (505), associated with the plurality of BWPs of the cell of the AN (110); and
transmit the plurality of SSBs (505) to the UE (104, 105) in more than one of the plurality of BWPs of the cell of the AN (110),
generate a plurality of BWP-downlink IEs that configure the respective BWPs of the cell of the AN (110), wherein the BWP-downlink IEs of those BWPs on which the plurality of SSBs (505) are transmitted include a measurement object, MO, identifications, IDs; and
transmit the one or more BWP-downlink IEs to the UE (104, 105).

## Patentansprüche

1. Ein oder mehrere computerlesbare Medien, die Anweisungen umfassen, um bei Ausführung der Anweisungen durch einen oder mehrere Prozessoren eines Benutzergeräts (User Equipment, UE), das UE dazu zu veranlassen:
beim Empfang einer Nachricht von einem Zugangsknoten (Access Node, AN) ein Informationselement (IE) zu dekodieren, das das UE (104, 105) mit einer Option autorisiert, nur einen Synchronisationssignalblock (SSB) zu messen, der einer Zelle entspricht, wenn eine Vielzahl von SSBs (505), die der einen Zelle entsprechen, in einer Vielzahl von Bandbreitenteilen (Bandwidth Parts, BWPs) an das UE (104, 105) übertragen werden;
beim Empfang eine Vielzahl von BWP-Downlink-IEs zu dekodieren, die die jeweiligen BWPs konfigurieren, wobei die BWP-Downlink-IEs jener BWPs, auf denen die Vielzahl von SSBs (505) übertragen werden, Identifikationen (IDs) eines Messobjekts (MO) enthalten; und
zu bestimmen, dass die Vielzahl von SSBs (505), die an das UE (104, 105) in den jeweiligen BWPs übertragen werden, der einen Zelle basierend auf den MO-IDs entsprechen, die in der Vielzahl von BWP-Downlink-IEs enthalten sind;
einen SSB eines BWP unter der Vielzahl von SSBs (505) der jeweiligen BWPs zu messen, für die das BWP-Downlink-IE eine MO-ID enthält.

2. Ein oder mehrere computerlesbare Medien nach Anspruch 1, wobei jeder der Vielzahl von SSBs (505) einen Satz wiederholter SSBs (505) enthält.

3. Ein oder mehrere computerlesbare Medien nach Anspruch 1 oder 2, wobei die Zelle eine bedienende Zelle des UE (104, 105) oder eine benachbarte Zelle ist.

4. Ein oder mehrere computerlesbare Medien, die Anweisungen umfassen, um bei Ausführung der Anweisungen durch einen oder mehrere Prozessoren eines Zugangsknotens (AN), den AN dazu zu veranlassen:
ein Informationselement (IE) zu erzeugen, das dazu dient, das UE (104, 105) mit einer Option zu autorisieren, nur einen Synchronisationssignalblock (SSB) zu messen, der einer Zelle des AN (110) entspricht, wenn eine Vielzahl von SSBs (505), die der einen Zelle des AN (110) entsprechen, in einer Vielzahl von Bandbreitenteilen (BWPs) an das UE (104, 105) übertragen werden; und
das IE an das UE (104, 105) mittels Funkressourcensteuerung (Radio Resource Control, RRC)-Signalisierung zu übertragen,
eine Vielzahl von Synchronisationssignalblöcken (SSBs) (505), die der Vielzahl von BWPs der Zelle des AN (110) zugeordnet sind, zu erzeugen; und
die Vielzahl von SSBs (505) an das UE (104, 105) in mehr als einem der Vielzahl von BWPs der Zelle des AN (110) zu übertragen,
eine Vielzahl von BWP-Downlink-IEs zu erzeugen, die die jeweiligen BWPs der Zelle des AN (110) konfigurieren, wobei die BWP-Downlink-IEs jener BWPs, auf denen die Vielzahl von SSBs (505) übertragen werden, Identifikationen (IDs) eines Messobjekts (MO) enthalten; und
das eine oder die mehreren BWP-Downlink-IEs an das UE (104, 105) zu übertragen.

5. Vorrichtung eines Benutzergeräts (UE), die konfiguriert ist, um:
beim Empfang einer Nachricht von einem Zugangsknoten (AN) (110) ein Informationselement (IE) zu dekodieren, das das UE (104, 105) mit einer Option autorisiert, nur einen Synchronisationssignalblock (SSB) zu messen, der einer Zelle entspricht, wenn eine Vielzahl von SSBs (505), die der einen Zelle entsprechen, in einer Vielzahl von Bandbreitenteilen (BWPs) an das UE (104, 105) übertragen werden;
beim Empfang eine Vielzahl von BWP-Downlink-IEs zu dekodieren, die die jeweiligen BWPs jeweils konfigurieren, wobei die BWP-Downlink-IEs jener BWPs, auf denen die Vielzahl von SSBs (505) übertragen werden, Identifikationen (IDs) eines Messobjekts (MO) enthalten; und
zu bestimmen, dass die Vielzahl von SSBs (505), die an das UE (104, 105) in den jeweiligen BWPs übertragen werden, der einen Zelle basierend auf den MO-IDs entsprechen, die in der Vielzahl von BWP-Downlink-IEs enthalten sind;
einen SSB eines BWP unter der Vielzahl von SSBs (505) der jeweiligen BWPs zu messen, für die das BWP-Downlink-IE eine MO-ID enthält.

6. Vorrichtung eines Zugangsknotens (AN), die konfiguriert ist, um:
ein Informationselement (IE) zu erzeugen, das dazu dient, das UE (104, 105) mit einer Option zu autorisieren, nur einen Synchronisationssignalblock (SSB) zu messen, der einer Zelle des AN (110) entspricht, wenn eine Vielzahl von SSBs (505), die der einen Zelle des AN (110) entsprechen, in einer Vielzahl von Bandbreitenteilen (BWPs) an das UE (104, 105) übertragen werden; und
das IE an das UE (104, 105) mittels Funkressourcensteuerung (Radio Resource Control, RRC)-Signalisierung zu übertragen,
eine Vielzahl von Synchronisationssignalblöcken (SSBs) (505), die der Vielzahl von BWPs der Zelle des AN (110) zugeordnet sind, zu erzeugen; und
die Vielzahl von SSBs (505) an das UE (104, 105) in mehr als einem der Vielzahl von BWPs der Zelle des AN (110) zu übertragen,
eine Vielzahl von BWP-Downlink-IEs zu erzeugen, die die jeweiligen BWPs der Zelle des AN (110) konfigurieren, wobei die BWP-Downlink-IEs jener BWPs, auf denen die Vielzahl von SSBs (505) übertragen werden, Identifikationen (IDs) eines Messobjekts (MO) enthalten; und
das eine oder die mehreren BWP-Downlink-IEs an das UE (104, 105) zu übertragen.

## Revendications

1. Un ou plusieurs supports lisibles par ordinateur comprenant des instructions pour, lors de l'exécution des instructions par un ou plusieurs processeurs d'un équipement utilisateur, UE, amener l'UE à :
décoder, lors de la réception d'un message en provenance d'un nœud d'accès, AN, un élément d'information, IE, qui autorise l'UE (104, 105) à une option de ne mesurer qu'un seul bloc de signal de synchronisation, SSB, correspondant à une cellule, si une pluralité de SSB (505) correspondant à ladite une cellule est transmise à l'UE (104, 105) dans une pluralité de parties de bande passante, BWP ;
décoder, lors de la réception, une pluralité d'IE de liaison descendante de BWP qui configure les BWP respectives, les IE de liaison descendante de BWP des BWP sur lesquelles est transmise la pluralité de SSB (505) incluant des identifications, ID, d'objet de mesure, MO ; et
déterminer que la pluralité de SSB (505) transmise à l'UE (104, 105) dans les BWP respectives correspond à ladite une cellule sur la base des ID MO inclus dans la pluralité d'IE de liaison descendante de BWP ;
mesurer une SSB d'une BWP parmi la pluralité de SSB (505) de BWP respectives pour lesquelles l'IE de liaison descendante de BWP inclut un ID MO.

2. Un ou plusieurs supports lisibles par ordinateur selon la revendication 1, dans lesquels chacun de la pluralité de SSB (505) inclut un ensemble de SSB répétés (505).

3. Un ou plusieurs supports lisibles par ordinateur selon la revendication 1 ou 2, dans lesquels la cellule est une cellule de desserte de l'UE (104, 105) ou une cellule voisine.

4. Un ou plusieurs supports lisibles par ordinateur, comprenant des instructions pour, lors de l'exécution des instructions par un ou plusieurs processeurs d'un nœud d'accès, AN, amener l'AN à :
générer un élément d'informations, IE, qui est destiné à autoriser l'UE (104, 105) à une option de ne mesurer qu'un seul bloc de signal de synchronisation, SSB, correspondant à une cellule de l'AN (110), si une pluralité de SSB (505) correspondant à ladite une cellule de l'AN (110) est transmise à l'UE (104, 105) dans une pluralité de parties de bande passante, BWP ; et
transmettre l'IE à l'UE (104, 105) via une signalisation de commande de ressources radio, RRC,
générer une pluralité de blocs de signal de synchronisation, SSB (505), associée à la pluralité de BWP de la cellule de l'AN (110) ; et
transmettre la pluralité de SSB (505) à l'UE (104, 105) dans plus d'une de la pluralité de BWP de la cellule de l'AN (110),
générer une pluralité d'IE de liaison descendante de BWP qui configure les BWP respectives de la cellule de l'AN (110), les IE de liaison descendante de BWP des BWP sur lesquelles est transmise la pluralité de SSB (505) incluant des identifications, ID, d'objet de mesure, MO ; et
transmettre le ou les IE de liaison descendante de BWP à l'UE (104, 105).

5. Appareil d'un équipement utilisateur, UE, configuré pour :
décoder, lors de la réception d'un message en provenance d'un nœud d'accès (110), AN (110), un élément d'information, IE, qui autorise l'UE (104, 105) à une option de ne mesurer qu'un seul bloc de signal de synchronisation, SSB, correspondant à une cellule, si une pluralité de SSB (505) correspondant à ladite une cellule est transmise à l'UE (104, 105) dans une pluralité de parties de bande passante, BWP ;
décoder, lors de la réception, une pluralité d'IE de liaison descendante de BWP qui configure les BWP respectives, et respectivement, les IE de liaison descendante de BWP des BWP sur lesquelles est transmise la pluralité de SSB (505) incluant des identifications, ID, d'objet de mesure, MO ; et
déterminer que la pluralité de SSB (505) transmise à l'UE (104, 105) dans les BWP respectives correspond à ladite une cellule sur la base des ID MO inclus dans la pluralité d'IE de liaison descendante de BWP ;
mesurer une SSB d'une BWP parmi la pluralité de SSB (505) de BWP respectives pour lesquelles l'IE de liaison descendante de BWP inclut un ID MO.

6. Appareil d'un nœud d'accès, AN, configuré pour :
générer un élément d'informations, IE, qui est destiné à autoriser l'UE (104, 105) à une option de ne mesurer qu'un seul bloc de signal de synchronisation, SSB, correspondant à une cellule de l'AN (110), si une pluralité de SSB (505) correspondant à ladite une cellule de l'AN (110) est transmise à l'UE (104, 105) dans une pluralité de parties de bande passante, BWP ; et
transmettre l'IE à l'UE (104, 105) via une signalisation de commande de ressources radio, RRC,
générer une pluralité de blocs de signal de synchronisation, SSB (505), associée à la pluralité de BWP de la cellule de l'AN (110) ; et
transmettre la pluralité de SSB (505) à l'UE (104, 105) dans plus d'une de la pluralité de BWP de la cellule de l'AN (110),
générer une pluralité d'IE de liaison descendante de BWP qui configure les BWP respectives de la cellule de l'AN (110), les IE de liaison descendante de BWP des BWP sur lesquelles est transmise la pluralité de SSB (505) incluant des identifications, ID, d'objet de mesure, MO ; et
transmettre le ou les IE de liaison descendante de BWP à l'UE (104, 105).
